Europäisches Patentamt

European Patent Office

Office européen des brevets

(11) Veröffentlichungsnummer: **0 078 950**
**B1**

(12) **EUROPÄISCHE PATENTSCHRIFT**

(45) Veröffentlichungstag der Patentschrift:
02.05.85

(51) Int. Cl.⁴: **C 01 G 49/02,** H 01 F 1/11

(21) Anmeldenummer: **82109746.6**

(22) Anmeldetag: **22.10.82**

(54) **Verfahren zur Herstellung von nadelförmigen, ferrimagnetischen Eisenoxiden.**

(30) Priorität: **05.11.81 DE 3143870**

(43) Veröffentlichungstag der Anmeldung:
**18.05.83 Patentblatt 83/20**

(45) Bekanntmachung des Hinweises auf die Patenterteilung:
**02.05.85 Patentblatt 85/18**

(84) Benannte Vertragsstaaten:
**DE FR GB NL**

(56) Entgegenhaltungen:
**EP - A - 0 014 302**
**EP - A - 0 024 693**
**DE - A - 2 064 804**
**FR - A - 2 369 214**
**US - A - 4 176 172**

(73) Patentinhaber: **BASF Aktiengesellschaft,**
**Carl-Bosch-Strasse 38, D-6700 Ludwigshafen (DE)**

(72) Erfinder: **Sarnecki, Wilhelm, Dr., Woogstrasse 48,**
**D-6703 Limburgerhof (DE)**
Erfinder: **Kovacs, Jenoe, Dr., Robert-Koch-Strasse 18,**
**D-6712 Bobenheim-Roxheim (DE)**
Erfinder: **Loeser, Werner, Dr., Klagenfurter Strasse 16,**
**D-6700 Ludwigshafen (DE)**
Erfinder: **Rudolf, Peter, Dr., Wiesenstrasse 1,**
**D-6708 Neuhofen (DE)**
Erfinder: **Vaeth, Guenter, Woogstrasse 35,**
**D-6703 Limburgerhof (DE)**

ACTORUM AG

# Beschreibung

Die Erfindung betrifft ein Verfahren zur Herstellung nadelförmiger ferrimagnetischer Eisenoxide durch Reduktion von im wesentlichen aus Lepidokrokit bestehendem Eisen(III)oxid/-hydroxid bei Temperaturen zwischen 350 und 600° C mit in diesem Temperaturbereich in Gegenwart von Eisenoxid zersetzlichen organischen Verbindungen zum Magnetit und gegebenenfalls anschliessender zumindest teilweiser Oxidation des Magnetits mit sauerstoffhaltigen Gasen bei 200 bis 450° C.

Nadelförmige ferrimagnetische Eisenoxide, wie z.B. Magnetit und γ-Eisen(III)oxid, werden seit langem in grossem Umfang als magnetisierbares Material bei der Herstellung von magnetischen Aufzeichnungsträgern eingesetzt. Zur Herstellung des vor allem verwendeten γ-Eisen(III)oxids sind bereits eine Vielzahl von Verfahren bekannt geworden. So beschreibt bereits die GB-A Nr. 675260 ein Verfahren zur Gewinnung von γ-Eisen(III)oxid, bei welchem nadelförmiges α-Eisenoxid/-hydroxid (Goethit) zum α-Eisen(III)-oxid entwässert, in reduzierender Atmosphäre bei mehr als 300° C zum Magnetit umgewandelt und an Luft bei Temperaturen unterhalb 450° C zum nadelförmigen γ-Eisen(III)oxid oxidiert wird. Im Verlauf der Bemühungen zur Verbesserung der kristallinen, mechanischen und magnetischen Eigenschaften solcher Materialien wurde dieser Prozess in seinen einzelnen Stufen mehrfach variiert sowie gleichfalls durch Änderung der Einsatzstoffe abgewandelt.

So ist es auch bereits bekannt, dass sich ferrimagnetische Eisenoxide durch Erhitzen von Eisenoxid/-hydroxiden mit organischen Stoffen herstellen lassen. Dabei werden die organischen Stoffe zersetzt und die Eisenoxid/-hydroxide zu Magnetit reduziert, der dann entweder selbst als Magnetpigment verwendet werden oder in der beschriebenen Weise zum γ-Eisen(III)oxid oxidiert werden kann. Schon in einer in der DE-C Nr. 801352 offenbarten Verfahrensweise werden unmagnetische Eisenoxide durch Behandeln mit Salzen kurzkettiger Carbonsäuren und anschliessendem Erhitzen in Magnetit überführt. Gemäss der US-A Nr. 2900336 ist die Reduktion von α-$Fe_2O_3$ oder α-FeOOH mit allen organischen Stoffen möglich, die unterhalb 540° C mit niedrigem Asche- und Teergehalt cracken. In der Folge wurde noch mehrmals die Reduktion der α-Eisenoxide mit organischen Stoffen beschrieben, z.B. mit höheren Kohlenwasserstoffen, Alkoholen, Aminen, Fettsäuren oder deren Salzen, mit Öl, Fett oder Wachs (DE-A Nr. 2064804, DD-A Nr. 91017, DE-B Nr. 1203656, DE-B Nr. 1771327). Auch beim γ-FeOOH ist die Reduktion mit Kokosnussölfettsäure beschrieben (DE-B Nr. 2212435). Wesentlich bei diesen Verfahren ist ein gutes Mischen der organischen Verbindungen mit dem Eisenoxid oder ein Auftragen als sehr dünne Schicht auf das Oxid. Zu diesem Zweck können Fettsäuren in Form ihrer Seifen entweder schon während der Oxidherstellung (DD-A Nr. 91017) oder in einer eigenen Verfahrensstufe in der Suspension des Eisenoxids dispergiert bzw. als unlösliche Seifen ausgefällt werden (DE-B Nr. 1771327, DE-B Nr. 1203656, DE-B Nr. 2212435). Bei anderen organischen Verbindungen ist es gemäss der DE-A Nr. 2064804 vorteilhaft, das verwendete α-Eisenoxid mit einer flüssigen organischen Verbindung zu tränken oder zu beschichten, den Überschuss an organischen Verbindungen abzutrennen und das Eisenoxid in einem geschlossenen Gefäss zu erhitzen. Falls feste organische Verbindungen verwendet werden sollen, schmilzt man sie zur gleichmässigen Verteilung auf oder löst sie in einem geeigneten Lösungsmittel.

Diese Art der Reduktion im Rahmen der Herstellung von magnetischen Eisenoxiden ergibt jedoch keine besonders vorteilhaften magnetischen Eigenschaften. So lassen sich wie beispielsweise in der DE-A Nr. 2212435 offenbart bei der Herstellung von γ-Eisen(III)oxid aus Lepidokrokit durch die Reduktion mit organischen Verbindungen nur niedrige Koerzitivfeldstärken von kleiner 26 kA/m erzielen. Um höhere Koerzitivfeldstärken zu erreichen, sind zusätzliche Massnahmen, wie die Reduktion in Wasserstoffatmosphäre oder das Tempern des eingesetzten Lepidokrokits mit anschliessender Umwandlung mittels organischer Verbindungen erforderlich (u.a. DE-C Nr. 2735316, DE-A Nr. 2805405).

Die zweifellos im Vergleich zur Wasserstoffreduktion einfacher zu handhabende Reduktion der Eisenoxide mittels organischer Verbindungen zum Magnetit bei der Herstellung von γ-Eisen(III)oxid bedarf für die Herstellung von Materialien mit verbesserten magnetischen Eigenschaften besonderer Massnahmen und zusätzlicher Verfahrensschritte angefangen von der besonders homogenen Vermischung der Reaktanten bis zur gesonderten Entwässerung, Ausrüstung und Temperung der zu verarbeitenden Eisenoxide.

Es bestand daher die Aufgabe, nach Verfahren zu suchen, welche die Nachteile dieser besonderen Verfahrensschritte nicht aufweisen und dennoch nadelförmige ferrimagnetische Eisenoxide liefern, welche sich in ihren magnetischen Eigenschaften insbesondere in einer hohen Koerzitivfeldstärke auszeichnen und durch ihre einheitliche Struktur vor allem für die Herstellung rauscharmer magnetischer Aufzeichnungsträger eignen.

Obwohl es anhand des Standes der Technik zu erwarten war, dass sich bei der Herstellung von nadelförmigen ferrimagnetischen Eisenoxiden durch Reduktion von im wesentlichen aus Lepidokrokit bestehendem Eisen(III)oxid/-hydroxid bei Temperaturen zwischen 350 und 600° C mittels in diesem Temperaturbereich in Gegenwart von Eisenoxid zersetzlichen organischen Verbindungen zum Magnetit und gegebenenfalls anschliessender zumindest teilweiser Oxidation des Magnetits mit sauerstoffhaltigen Gasen bei 200 bis 450° C alle organischen Verbindungen gleichermassen eignen, wurde nun überraschenderweise gefunden, dass sich die gestellte Aufgabe in besonders vorteilhafter Weise lösen lässt, wenn zur Reduktion als organische Verbindungen Polymere mit einem Molekulargewicht von grösser 3000 eingesetzt werden.

Bei der Ausarbeitung des erfindungsgemässen Verfahrens hat sich ergeben, dass insbesondere organische Verbindungen mit einem Molekulargewicht zwischen 3000 und 40 000 in einer Menge von 0,8 bis 15 Gew.-%, bezogen auf das Eisen-(III)oxid/-hydroxid, zu vorteilhaften Ergebnissen führen.

Aufgrund des Standes der Technik sollten alle organischen Substanzen, welche unterhalb von 540° C ohne Rückstände von Teer und Asche zersetzlich sind, als Reduktionsmittel geeignet sein. Aus der Forderung nach einer rückstandslosen Zersetzung war insbesondere abzuleiten, dass vor allem solche mit niedrigem Molekulargewicht zu bevorzugen seien, wie z.B. Paraffinwachs (MG 470), Stearinsäure (MG 284) oder Rizinusöl (MG 930).

Die vorteilhafte Wirkung der beim erfindungsgemässen Verfahren eingesetzten organischen Polymeren war somit nicht vorhersehbar. Entsprechende organische Polymere sind Verbindungen, die aus Kohlenstoff und Wasserstoff bestehen und daneben auch Heteroatome wie Sauerstoff und Stickstoff enthalten können. Besonders vorteilhaft ist die Verwendung synthetisch hergestellter Produkte wie z.B. Polyethylene, Polypropylene, Polyester, Polyether, Polyamide, Polycarbonate, weil hier unterschiedliche Molekulargewichtsstufen in einheitlicher Qualität zur Verfügung stehen.

Bei der Durchführung des erfindungsgemässen Verfahrens wird das im wesentlichen aus Lepidokrokit bestehende Eisen(III)oxid/-hydroxid mit dem üblicherweise als Granulat vorliegenden hochmolekularen organischen Polymeren intensiv mechanisch vermischt und dann während 5 bis 60 min bei einer Temperatur zwischen 350 und 600° C zum Magnetit reduziert. Die Reaktion wird zweckmässigerweise in einem schwachen Inertgasstrom durchgeführt, um das bei der Reaktion entstehende Wasser zu entfernen. Als Eisen(III)-oxid/-hydroxid kann nicht nur reiner Lepidokrokit, sondern auch Gemische davon mit Goethit eingesetzt werden, vorteilhafterweise bis zu einem Goethitanteil von 20 Gew.-%.

Die aufgabengemäss geforderte hohe Koerzitivfeldstärke lässt sich durch Temperatur, Aufheizzeit und Nachtemperzeit sowie durch Menge und Molekulargewicht der organischen Verbindung beeinflussen. Dabei wird die Koerzitivfeldstärke um so höher, je höher die angewendete Temperatur, je länger die Aufheizzeit bzw. Nachtemperzeit, je geringer die Menge und je höher das Molekulargewicht der verwendeten organischen Substanz ist. Bei der Verwendung organischer Verbindungen mit Molekulargewichten zwischen 3000 und 40 000 ist eine deutliche Zunahme der Koerzitivfeldstärke des verfahrensmässig erhaltenen magnetischen Materials in Abhängigkeit von der Grösse des Molekulargewichts festzustellen. Eine weitere Steigerung des Molekulargewichts bis auf Werte von beispielsweise 550 000 bei Polyethylen resultiert in keiner weiteren Anhebung der magnetischen Werte. Die zu verwendende Menge an organischen Substanzen hängt vom absoluten Kohlenstoffgehalt der Verbindungen ab. Wenn bei reinen Kohlenwasserstoffen beispielsweise eine Menge von 1 Gew.-%, bezogen auf das Eisenoxid, zu dessen vollständiger Reduktion ausreicht, dann muss bei Verwendung eines Polyesters dessen Menge im Verhältnis der Kohlenstoffgehalte erhöht werden. Die untere Gewichtsgrenze wird durch die zur vollständigen Reduktion des Eisenoxid/-hydroxids zum Magnetit notwendigen Mindestmenge bestimmt. Sie liegt bei Kohlenwasserstoffen bei etwa 0,8 Gew.-%. Die optimale Menge an organischer Substanz kann durch Vorversuche schnell ermittelt werden und liegt vorteilhafterweise bei 0,6 bis 2,0 Gew.-% Kohlenstoff. Daraus ergibt sich dann der Gewichtsanteil der organischen Substanz.

Die für das erfindungsgemässe Verfahren vorteilhaften Temperaturen hängen vom Molekulargewicht der eingesetzten organischen Verbindung ab. In nachfolgender Aufstellung ist angegeben, welcher Anteil an Eisenoxid/-hydroxid (%) beim schnellen Aufheizen (5 bis 10 min) auf die Temperatur $T_R$ mit den angegebenen organischen Verbindungen zum Magnetit reduziert wird.

| Verbindung | Molekularge-wicht | $T_R(°C)$ | $Fe_3O_4$ (%) |
|---|---|---|---|
| Paraffinwachs | ~ 470 | 375 | 89 |
| Stearinsäure | 284 | 370 | 84 |
| Rizinusöl | ~ 930 | 370 | 82 |
| Polyethylen | 3000 | 370 | 35 |
| Polyethylen | 10 000 | 400 | 18 |
| Polyethylen | 20 000 | 408 | 14 |
| Polyethylen | 40 000 | 420 | 10 |
| Polyethylen | 350 000 bis 550 000 | 405 | 8 |
| Polyamid | 33 000 | 403 | 10 |
| Polyamid | 33 000 | 495 | 89 |

Während die niedermolekularen Verbindungen unabhängig von ihrer Zusammensetzung etwa gleiche Reduktionswirkung zeigen, verzögert sich bei Verbindungen mit Molekulargewichten ab etwa 3000 die Umsetzung mit Eisenoxiden mit steigendem Molekulargewicht immer mehr, d.h. die Reduktion beginnt erst bei höheren Temperaturen. Eine weitere über ein Molekulargewicht von 40 000 hinausgehende Erhöhung bringt keine zusätzliche Reaktionsverzögerung mehr. Es zeigt sich ausserdem, dass die Reaktion bei Substanzen mit hohem Molekulargewicht zwar erst bei höheren Temperaturen einsetzt, dann aber wegen dieser hohen Temperaturen schnell abläuft. Während somit bei Temperaturen unter 400° C Reduktionszeiten bis 1 h erforderlich sind, genügen bei hohen Temperaturen über 500° C schon wenige Minuten zur vollständigen Reduktion. Dennoch ist es von Vorteil, auch bei diesen hohen Temperaturen das Reduktionsgut bis zu etwa 1 h auf dieser Temperatur zu halten, d.h. also den gebildeten Magnetit nachzutempern, weil dadurch die $H_c$-Werte noch angehoben werden. Längere Nachtemperzeiten bringen keine weiteren Vorteile, sind jedoch auch nicht von Nachteil.

Der durch die Reduktion erhaltene Magnetit wird gegebenenfalls anschliessend mit sauerstoffhaltigen Gasen zweckmässigerweise durch Überleiten von Luft bei 200 bis 400° C zu nadelförmigen ferrimagnetischen Eisenoxiden der Formel $FeO_x$ mit Werten für x von grösser 1,33 bis 1,50 oxidiert. Üblicherweise wird die Oxidation bis zur Stufe des $\gamma$-Eisen(III)oxids geführt (x = 1,5).

Die erfindungsgemäss hergestellten nadelförmigen, ferrimagnetischen Eisenoxide, insbesondere das auf diese Weise erhältliche $\gamma$-Eisen(III)-oxid, unterscheiden sich deutlich von den nach bekannten Umwandlungsverfahren erhältlichen $\gamma$-Eisen(III)oxiden durch eine höhere Koerzitivfeldstärke und eine besondere Einheitlichkeit des Materials, welche überraschenderweise bei dem erfindungsgemässen Verfahren zu erzielen sind. Diese Verbesserungen beim magnetischen Material machen sich auch deutlich bei den daraus hergestellten Magnetbändern, insbesondere hinsichtlich des Rauschverhaltens, bemerkbar.

Zur Herstellung von magnetischen Schichten wird das $\gamma$-Eisen(III)oxid in polymeren Bindemitteln dispergiert. Als Bindemittel eignen sich für diesen Zweck bekannte Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Gewicht.

Die magnetischen Pulverwerte werden durch Messung einer auf ein Stopfgewicht von D = 1,2 g/cm³ gebrachten Oxidprobe mit einem konventionellen Schwingmagnetometer bei 100 kA/m Messfeldstärke bestimmt. Die Koerzitivfeldstärke ($H_c$) wird in (kA/m), die spezifische Remanenz ($M_r/\rho$) und die spezifische Magnetisierung ($M_m/\rho$) werden in (nT m³/g) angegeben.

*Beispiel 1*

Je 200 g $\gamma$-FeOOH mit einem $\alpha$-FeOOH-Gehalt von 8% und einer BET-Oberfläche von 31,8 m²/g werden in einem 2-l-Drehkolben im schwachen Stickstoffstrom zusammen mit der in der Tabelle 1 angegebenen organischen Verbindung in der dort angegebenen Zeit auf die ebenfalls angegebene Reduktionstemperatur $T_R$ aufgeheizt und bei dieser Temperatur die angegebene Zeit nachgetempert. Anschliessend wird das Produkt auf die Oxidationstemperatur $T_{Ox}$ abgekühlt und die angegebene Zeit im Luftstrom oxidiert. Die magnetischen Eigenschaften der resultierenden $\gamma$-Eisen(III)-oxidproben sind in Tabelle 1 angegeben.

*Vergleichsversuch 1*

Es wird wie in Beispiel 1 beschrieben verfahren, jedoch wird Stearinsäure als organische Verbindung zur Reduktion eingesetzt. Die Ergebnisse sind in Tabelle 1 angegeben.

*Tabelle 1*

| | Organische Verbindung | Mol-Gew. | Anteil (%) | Aufheizzeit (min) | $T_R$ (°C) | Nachtemperzeit (min) | Oxidation Zeit (min) | Oxidation Temp. (°C) | $\gamma$-Fe₂O₃ $H_{c_{1,2}}$ | $M_m/\rho$ | $M_r/\rho$ |
|---|---|---|---|---|---|---|---|---|---|---|---|
| Beispiel 1a | Polyamid | 33 000 | 3 | 30 | 450 | — | 30 | 350 | 28,6 | 79 | 45 |
| Beispiel 1b | Polyamid | 33 000 | 3 | 30 | 500 | — | 30 | 350 | 28,4 | 83 | 46 |
| Beispiel 1c | Polyamid | 33 000 | 3 | 30 | 550 | — | 30 | 350 | 28,8 | 80 | 45 |
| Beispiel 1d | Polyamid | 33 000 | 2 | 30 | 550 | — | 30 | 350 | 29,4 | 76 | 43 |
| Beispiel 1e | Polyethylen | 3 000 | 2 | 12 | 550 | — | 60 | 300 | 26,3 | 76 | 43 |
| Beispiel 1f | Polyethylen | 40 000 | 2 | 12 | 550 | — | 60 | 300 | 26,6 | 79 | 46 |
| Beispiel 1g | Polyethylen | 40 000 | 2 | 30 | 550 | — | 60 | 300 | 27,6 | 78 | 45 |
| Beispiel 1h | Polyethylen | 40 000 | 2 | 12 | 550 | 25 | 60 | 300 | 28,2 | 80 | 45 |
| Beispiel 1i | Polyester | 25 000 | 4 | 33 | 550 | — | 30 | 350 | 27,5 | 84 | 47 |
| Vergleichsversuch 1 | Stearinsäure | 284 | 2 | 12 | 550 | — | 60 | 300 | 24,5 | 78 | 42 |

*Beispiel 2*

Wie in Beispiel 1 beschrieben, werden je 200 g eines $\gamma$-FeOOH (BET-Oberfläche: 32,1 m²/g) mit 2 Gew.-% der in Tabelle 2 genannten organischen Verbindungen bei 550° C reduziert. Das Reduktionsprodukt wurde dann 60 min lang bei 350° C im Luftstrom zum $\gamma$-Fe₂O₃ oxidiert.

*(Tabelle auf der nächsten Seite)*

*Beispiel 3*

Wie in Beispiel 1 beschrieben, werden 200 g $\gamma$-FeOOH (BET-Oberfläche: 31,8 m²/g) mit 15 Gew.-% eines Polyethylenglykols vom Molekulargewicht 8500 in 33 min von 280 auf 550° C aufgeheizt, dann bei 300° C 30 min lang im Luftstrom oxidiert. Das erhaltene Pulver hat folgende magnetische Eigenschaften:

$H_{c_{1,2}}$= 25,7; $M_m/\rho$= 74; $M_r/\rho$= 42.

*Tabelle 2*

| Nr. | Organische Verbindung | Mol-Gew. | Aufheizzeit (min) | Temperzeit (min) | $H_{c_{1,2}}$ | $M_m/\rho$ | $M_r/\rho$ |
|---|---|---|---|---|---|---|---|
| a | Polyethylen | 40 000 | 48 | 12 | 30,0 | 78 | 45 |
| b | Polyethylen | 350 000 bis 550 000 | 38 | 22 | 30,1 | 78 | 45 |

### Beispiel 4

Die Reduktion wird in einem kontinuierlichen Drehrohrofen mit 3 Heizzonen durchgeführt. Die jeweils in der Mitte der betreffenden Heizzone gemessenen Temperaturen betragen 290, 400 und 550° C. Unter einem schwachen Stickstoffstrom von 225 Nl/h werden 3 kg γ-FeOOH/h, welche zuvor mit 2 Gew.-% eines Polyethylens mit einem Molekulargewicht von 40 000 1,5 h auf dem Rollbrett gemischt werden, bei einer Gesamtverweilzeit von 45 min in den 3 Heizzonen durchgesetzt. Der erhaltene Magnetit wird anschliessend bei 300° C in einem Drehrohrofen im Luftstrom oxidiert. Das erhaltene γ-Eisen(III)oxid hat folgende magnetische Eigenschaften:
$H_{c_{1,2}}$= 28,6; $M_m/\rho$= 80; $M_r/\rho$= 45.

### Beispiel 5

Es wird wie in Beispiel 4 beschrieben verfahren, jedoch wird das Eisenoxid/-hydroxid vor der Reduktion mit nur 1,5 Gew.-% des Polyethylens vermischt und die Temperaturen in den Heizzonen betragen 265, 390 und 500° C. Die magnetischen Eigenschaften des erhaltenen γ-Eisen(III)oxids sind:
$H_{c_{1,2}}$= 29,3; $M_m/\rho$= 73; $M_r/\rho$= 42.

### Beispiel 6

Je 196 g γ-FeOOH mit einem α-FeOOH-Gehalt von 6% und einer BET-Oberfläche von 32,1 m²/g werden in einem 2-l-Drehkolben im schwachen Stickstoffstrom zusammen mit 2 Gew.-% der in Tabelle 3 angegebenen organischen Verbindung in 35 min auf 550° C aufgeheizt und dann bei 300° C 1 h lang im Luftstrom oxidiert. Die erhaltenen γ-Fe₂O₃-Werte sind in Tabelle 3 zusammengestellt.

*Tabelle 3*

| Beispiel | Organische Verbindung | Mol-Gew. | $H_{c_{1,2}}$ | γ-Fe₂O₃ $M_m/\rho$ | $M_r/\rho$ |
|---|---|---|---|---|---|
| 6a | Polyethylen | 20 000 | 27,4 | 78 | 44 |
| 6b | Polyethylen | 40 000 | 28,1 | 78 | 44 |
| 6c | Polyethylen | ~ 250 000 | 28,3 | 79 | 45 |

### Beispiel 7

196 g γ-FeOOH (BET-Oberfläche: 32,7 m²/g, α-FeOOH-Gehalt ca. 8%) werden in einem 2-l-Drehkolben im schwachen Stickstoffstrom zusammen mit 4 g Polyethylen (Molekulargewicht 250 000) in 37 min auf 550° C erhitzt. Das resultierende Eisenoxid hat die Zusammensetzung $FeO_{1,34}$. Die magnetischen We23erte sind: $H_{c_{1,2}}$= 29,5; $M_m/\rho$= 87; $M_r/\rho$= 48.

Dieses Pulver wird anschliessend 30 min in einem Gasstrom aus 100 l N₂/h + 25 l Luft/h bei 250° C oxidiert. Es wird ein Pulver der Zusammensetzung $FeO_{1,44}$ erhalten mit folgenden magnetischen Werten: $H_{c_{1,2}}$= 29,9; $M_m/\rho$= 84; $M_r/\rho$= 48.

Dann wird dieses Pulver noch einmal 15 min im gleichen Gasstrom aus N₂/Luft, dann noch 30 min im reinen Luftstrom oxidiert.

Das entstandene Pulver hatte die Zusammensetzung $FeO_{1,50}$ und zeigte folgende Magnetwerte: $H_{c_{1,2}}$= 29,0; $M_m/\rho$= 77; $M_r/\rho$= 44.

### Beispiel 8

27,7 Teile einer 13%igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan sowie 12 Teile einer 20%igen Lösung eines Copolymeren aus Vinylchlorid und Alkylmaleinat im gleichen Lösungsmittelgemisch werden mit 90 Teilen eines gemäss Beispiel 6a bis 6c hergestellten γ-Eisen(III)oxids, 2,25 Teilen eines Umsetzungsproduktes einer Dimerfettsäure mit einem Polyamin, als Dispergierhilfsmittel, weiteren 70,7 Teilen des genannten Lösungsmittelgemisches in einer 600 Vol.-Teile fassenden und mit 1800 Teilen Stahlkugeln eines Durchmessers von 4 bis 6 mm gefüllten Rührwerkskugelmühle 2 h lang dispergiert. Anschliessend werden nochmals 50,8 Teile der genannten Polyesterurethanlösung und 22 Teile der angegebenen Copolymerenlösung sowie 0,09 Teile eines handelsüblichen Siliconöls, 0,09 Teile Hydrochinon, 0,18 Teile Butylstearat, 0,09 Teile Stearinsäure und 12 Teile des genannten Lösungsmittelgemisches zugegeben und eine weitere Stunde dispergiert. Die erhaltene Dispersion wird unter Druck durch einen Filter mit 5-μm-Poren filtriert

und unmittelbar vor dem nachfolgenden Auftrag auf eine 12 µm dicke Polyethylenterephthalatfolie mittels eines üblichen Linealgiessers unter kräftigem Rühren je 100 Teile Dispersion mit 13,3 Teilen einer 75%igen Lösung eines Triisocyanats aus 3 mol Toluylendiisocyanat und 1 mol Trimethylolpropan in Ethylacetat versetzt. Der Auftrag erfolgt in einer solchen Dicke, dass nach dem Trocknen eine Schichtstärke von 5 µm verbleibt. Die beschichtete Folie wird nach Durchlaufen eines Magnetfeldes zur Ausrichtung der γ-Eisen(III)oxidteilchen getrocknet. Nach der Trocknung wird die Magnetschicht der beschichteten Folie durch zweimaliges Hindurchführen zwischen beheizten Walzen (90° C, 8 kg/cm) verdichtet und geglättet. Die Dicke der Magnetschicht beträgt dann 4 µm. nach dem Schneiden der beschichteten Folie in 3,81 mm breite Bänder werden an diesen der Rauschwert $RG_A$ nach DIN 45512, Blatt 2, gegen das IEC 1-Bezugsband R 723 DG gemessen. Die Ergebnisse sind in Tabelle 4 angegeben.

*Vergleichsversuch 2*

Es wird wie in Beispiel 8 beschrieben verfahren, jedoch werden 90 Teile eines gemäss den Angaben in der DE-C Nr. 2735316 hergestellten und üblicherweise für das IEC 1-Bezugsband eingesetzten γ-Eisen(III)oxids verwendet. Der bestimmte $RG_A$-Wert ist in Tabelle 4 angegeben.

*Tabelle 4*

|  | $RG_A$ (dB) |
|---|---|
| Beispiel 8 | |
|    Oxid 6a | + 1,2 |
|    Oxid 6b | + 1,0 |
|    Oxid 6c | + 1,1 |
| Vergleichsversuch 2 | 0 |

## Patentansprüche

1. Verfahren zur Herstellung von nadelförmigen ferrimagnetischen Eisenoxiden durch Reduktion von im wesentlichen aus Lepidokrokit bestehendem Eisen(III)oxid/-hydroxid bei Temperaturen zwischen 350 und 600° C mittels in diesem Temperaturbereich in Gegenwart von Eisenoxid zersetzlichen organischen Verbindungen zum Magnetit und gegebenenfalls anschliessender Oxidation des Magnetits mit sauerstoffhaltigen Gasen bei 200 bis 450° C zum nadelförmigen ferrimagnetischen Eisenoxid der Formel $FeO_x$ mit Werten für x von grösser 1,33 bis 1,50, dadurch gekennzeichnet, dass zur Reduktion als organische Verbindungen Polymere mit einem Molekulargewicht von grösser 3000 eingesetzt werden.

2. Verfahren gemäss Anspruch 1, dadurch gekennzeichnet, dass zur Reduktion als organische Verbindungen Polymere mit einem Molekulargewicht zwischen 3000 und 40 000 in einer Menge von 0,8 bis 15 Gew.-%, bezogen auf das Eisenoxid/-hydroxid, eingesetzt werden.

## Claims

1. A process for the preparation of an acicular ferrimagnetic iron oxide by reducing iron(III)oxide/hydroxide consisting essentially of lepidocrocite, at from 350 to 600° C, by means of an organic compound which is decomposable within this temperature range in the presence of iron oxide, to give magnetite, and, if desired, then oxidizing the magnetite with an oxygen-containing gas at from 200 to 450° C to give an acicular ferrimagnetic iron oxide of the formula $FeO_x$, where x is from above 1.33 to 1.50, wherein the organic compound employed for the reduction is a polymer having a molecular weight greater than 3,000.

2. A process as claimed in Claim 1, wherein the organic compound employed for the reduction is a polymer having a molecular weight of from 3,000 to 40,000, used in an amount of from 0.8 to 15% by weight, based on the iron oxide/hydroxide.

## Revendications

1. Procédé de préparation d'oxydes de fer ferrimagnétiques, aciculaires, par réduction en magnétite d'oxyde/hydroxyde de fer(III) constitué essentiellement de lépidocrocite, à des températures comprises entre 350 et 600° C, au moyen de composés organiques décomposables dans cette zone de température en présence d'oxyde de fer, et éventuellement ensuite oxydation de la magnétite avec des gaz oxygénés, entre 200 et 450° C, en oxyde de fer ferrimagnétique, aciculaire, de formule $FeO_x$, avec des valeurs de x de plus de 1,33 à 1,50, caractérisé par le fait que, pour la réduction, on utilise, comme composés organiques, des polymères d'un poids moléculaire de plus de 3000.

2. Procédé selon la revendication 1, caractérisé par le fait que, pour la réduction, on utilise, comme composés organiques, des polymères d'un poids moléculaire compris entre 3000 et 40000, en proportion de 0,8 à 15% en poids, rapporté à l'oxyde/hydroxyde de fer.